# EUROPÄISCHE PATENTSCHRIFT

(11) **EP 3 298 375 B1**
(45) Veröffentlichungstag und Bekanntmachung des Hinweises auf die Patenterteilung: **31.07.2019**
(21) Anmeldenummer: 16728629.3
(22) Anmeldetag: 20.05.2016
(51) Int. Cl.: G01M 1/02

(54) **VERFAHREN ZUR ANBRINGUNG EINES AUSGLEICHSGEWICHTS AN EINER WELLE UND EINE VORRICHTUNG HIERFÜR**
METHOD FOR INSTALLING A COUNTERWEIGHT ON A SHAFT, AND A DEVICE FOR THIS PURPOSE
PROCÉDÉ DE MONTAGE D'UNE MASSE D'ÉQUILIBRAGE SUR UN ARBRE ET DISPOSITIF ASSOCIÉ

(30) Priorität: 22.05.2015 DE 102015108187
(43) Veröffentlichungstag der Anmeldung: 28.03.2018
(73) Patentinhaber: Schenck RoTec GmbH, 64293 Darmstadt (DE)
(72) Erfinder: MUTH, Christian, 64405 Fischbachtal (DE)
(74) Vertreter: Haarpatent Patentanwälte Krämer Meyer
(86) Internationale Anmeldenummer: PCT/EP2016/061456
(87) Internationale Veröffentlichungsnummer: WO 2016/188913

(56) Entgegenhaltungen:
- WO-A1-2004/005878
- US-A- 3 554 061
- US-A- 5 526 686

## Beschreibung

Die Erfindung betrifft ein Verfahren zur Anbringung von Ausgleichsgewichten an einer Welle mit wenigstens einer Ausgleichsvorrichtung, die längs zu der in einer Unwuchtmessvorrichtung angeordneten Welle verschiebbar ist und eine Befestigungsvorrichtung zur Befestigung der Ausgleichsgewichte an der Welle aufweist. Ferner betrifft die Erfindung eine Ausgleichsvorrichtung zur Anbringung eines Ausgleichsgewichts in einem vorgegebenen einer Ausgleichsebene zugeordneten Ausgleichsbereich einer Welle, mit einer über eine Steuereinheit steuerbaren Befestigungsvorrichtung, die an einem freien Ende eine erste und eine zweite Aufnahme für ein Ausgleichsgewicht oder die Welle aufweist und einem Schlitten, der derart an der Ausgleichsvorrichtung angeordnet ist, dass die Ausgleichsvorrichtung in axialer Richtung entlang der Welle verfahrbar ist.

Auswuchtmaschinen der eingangs genannten Art werden zur Auswuchtung von Rotoren, wie beispielsweise Gelenkwellen oder Kardanwellen, verwendet. Um die Unwucht an dem Rotor bestimmen zu können, wird der Rotor in die Auswuchtmaschine eingelagert und in Rotation versetzt. Weist der Rotor eine Unwucht auf, so werden Wirkungen dieser Unwucht durch entsprechende Messwertaufnehmer aufgenommen und derart verarbeitet, dass die Unwucht in bekannter Weise ausgeglichen werden kann, indem beispielsweise ein Ausgleichsgewicht an dem Rotor mittels Schweißen oder Kleben angebracht wird. In der Regel erfolgt nach dem Ausgleich eine erneute Unwuchtmessung, um den Ausgleich zu kontrollieren. Nach Bedarf können weitere Ausgleiche erfolgen.

Die gemessene Unwucht in Betrag und Größe und die hieraus errechnete Ausgleichsmasse und Ausgleichswinkelposition werden auf einem an der Auswuchtmaschine fest montierten Anzeigesystem dargestellt. Solche Anzeigesystem sind u. a. aus DE 2 217 264 bekannt. Über das Anzeigesystem können ferner weitere Informationen zu der Messung, wie beispielsweise Auswuchtdrehzahl, angezeigt werden. Die Unwucht wird mithilfe einer automatischen oder manuell bedienbaren Ausgleichsvorrichtung ausgeglichen, indem ein Ausgleichsgewicht mittels einer Befestigungsvorrichtung an einer vom jeweiligen Rotortyp abhängigen Position an dem Rotor angebracht wird. Die Ausgleichsmasse hat relativ zu dem Rotor eine Ausgleichsposition, die insbesondere durch Radial-, Axial- und Winkelposition definiert wird, wobei die Radial- und Axialposition zur Anbringung des Ausgleichsgewichts vom Rotortyp abhängig sind und somit vorgegeben werden. Dahingegen sind die Ausgleichsmasse bzw. die Winkelposition das Ergebnis der Unwuchtmessung.

WO 2004/005878 A1 offenbart eine Vorrichtung zum Befestigen von Ausgleichsgewichten an Rotoren mit mehreren Ausgleichsebenen, insbesondere an Gelenkwellen oder Kardanwellen, vorzugsweise in einer Auswuchtmaschine. Die Vorrichtung weist zumindest eine längs der Rotorachse positionierbare zangenartige Einrichtung auf, mit der ein Ausgleichsgewicht am Außenumfang des Rotors platzierbar und dort befestigbar ist, wobei die zangenartige Einrichtung zur Aufnahme von mehreren Ausgleichsgewichten ausgebildet ist.

Weiterhin beschreibt US 5 526 686 A eine Vorrichtung zum Erfassen von Geometriedaten eines auszuwuchtenden Drehkörpers, wie z.B. einem Kraftfahrzeugrad, das auf einer Hauptwelle der Auswuchtmaschine geklemmt werden kann. Die Vorrichtung weist einen Messaufnehmer auf, der auf einer Tragstange der Auswuchtmaschine angeordnet ist, die parallel zur Hauptwelle verläuft und in ihrer Längsrichtung fixiert ist. Der Messaufnehmer ist um die Längsachse des Tragstabes drehbar und hat einen Schwenkkopf. Der Messaufnehmer weist ferner einen Messsensorhebel mit einem zwangsgeführten Messkopf auf, wobei der Messsensorhebel schwenkbar auf dem Schwenkkopf gelagert ist und ein Tastfinger auf dem Messkopf bei einer Schwenkbewegung des Messsensorhebels in paralleler Ausrichtung zur Hauptwelle in Richtung des zu erfassenden Rades und von diesem weg beweglich ist. Auf dem Schwenkkopf ist ein Winkelmessgerät angeordnet, das den Schwenkwinkel des Messhebels relativ zum Schwenkkopf erfasst.

Im Falle eines manuellen Unwuchtausgleichs ist die Ausgleichsvorrichtung von einem Bediener axial zu dem Rotor verfahrbar und kann an die vorgegebene Position bewegt werden. Die hierfür notwendigen Informationen entnimmt der Bediener dem Anzeigesystem, auf dem die Position oder ggf. weitere Positionen zur Anbringung von Ausgleichsgewichten angezeigt werden. Um Eigenschaften des Rotors durch die Anbringung des Ausgleichsgewichts nicht nachteilig zu beeinflussen, wird die Verfahrbarkeit der Ausgleichsvorrichtung mithilfe von manuell setzbaren Endanschlägen auf vorgegebene Ausgleichsbereiche begrenzt, so dass die Ausgleichsgewichte ausschließlich in diesen Bereichen angebracht werden können. Zudem wird dem Bediener der Ausgleichsvorrichtung im Falle von mehreren Ausgleichspositionen die Reihenfolge der Anbringung der Ausgleichsgewichte vorgegeben. Der Rotor kann automatisch oder manuell in eine Stellung gedreht werden, in der die errechnete Winkelposition gut zugänglich ist. Nachdem der Bediener die Ausgleichsvorrichtung in Position gebracht hat, bestückt er die Befestigungsvorrichtung mit dem Ausgleichsgewicht und initiiert den Befestigungsvorgang. Über das Anzeigesystem erhält er Informationen darüber, ob ein weiterer Ausgleich notwendig ist, so dass er die Ausgleichsvorrichtung ggf. zur nächsten Axialposition bewegen kann.

Nachteilig bei den bekannten Auswuchtmaschinen ist, dass der Bediener während der Bedienung der Ausgleichsvorrichtung keine Informationen zu dem Ausgleich bzw. zu der nächsten anzufahrenden Ausgleichsposition erhält und somit den Vorgang kurzzeitig unterbrechen muss, um dem Anzeigesystem weitere Informationen zu dem Ausgleichsvorgang zu entnehmen. Durch die Unterbrechung kommt es nicht nur zu einer Verzögerung des Ausgleichsvorgangs, sondern es kann auch zu Fehlern kommen, die ggf. dazu führen, dass das Ausgleichsgewicht nicht in dem vorgegebenen Bereich befestigt wird, was wiederum das Drehverhalten des Rotors nachteilig beeinflussen kann. Zudem wird dem Bediener die Reihenfolge der anzufahrenden Positionen vorgegeben, ohne jedoch die jeweilige Position der Ausgleichsvorrichtung zu berücksichtigen.

Der Erfindung liegt die Aufgabe zugrunde, die Bedienbarkeit einer Ausgleichsvorrichtung zu verbessern, so dass Befestigungsfehler bei der Anbringung der Ausgleichsgewichte minimiert werden können.

Die Aufgabe wird erfindungsgemäß dadurch gelöst, dass ein Verfahren zur Anbringung von Ausgleichsgewichten an einer Welle bereitgestellt wird, mit wenigstens einer Ausgleichsvorrichtung, die längs zu der in einer Unwuchtmessvorrichtung angeordneten Welle verschiebbar ist und eine Befestigungsvorrichtung zur Befestigung der Ausgleichsgewichte an der Welle aufweist. Das Verfahren umfasst die folgenden Schritte:
a. Um eine Rotationsachse drehbares Aufnehmen der Welle in einer an einem Maschinenbett angeordneten Lagereinrichtung der Unwuchtmessvorrichtung;
b. Drehen der Welle um die Rotationsachse, Bestimmung der Unwucht der Welle und Berechnen von Ausgleichsmassen und Winkelpositionen für wenigstens zwei jeweils einem vorgegebenen Ausgleichsbereich zugeordnete Ausgleichsebenen durch eine Auswerteeinheit;
c. Anzeige einer Position mindestens einer Ausgleichsvorrichtung relativ zu den den Ausgleichsbereichen zugeordneten Ausgleichsebenen auf einer mit einer Steuereinheit datenaustauschend verbundenen Anzeigeeinheit, wobei ein an der Ausgleichsvorrichtung festgelegter Sensor Positionsdaten erfasst und die Positionsdaten an die Steuereinheit leitet, die die Position der Ausgleichsvorrichtung relativ zu den Ausgleichsbereichen ermittelt;
d. Verfahren der Ausgleichsvorrichtung in einen der angezeigten Ausgleichsbereiche und Anzeige des von der Ausgleichsvorrichtung angefahrenen Ausgleichsbereichs und der diesem zugehörigen Ausgleichsmasse auf der Anzeigeeinheit;
e. Bestücken der Befestigungsvorrichtung mit einem der angezeigten Ausgleichsmasse entsprechenden Ausgleichsgewicht und
f. Initiieren des Vorgangs zur Befestigung des Ausgleichsgewichts an der Welle.

Die Unwucht der Welle wird gemessen und von einer Auswerteeinheit ausgewertet. Die Auswerteeinheit errechnet die Ausgleichsmassen und die Winkelpositionen für mindestens zwei jeweils einem Ausgleichsbereich zugeordnete Ausgleichsebenen für die Anbringung der Ausgleichsgewichte. In der Regel sind die Ausgleichsbereiche Rotortyp spezifisch und werden somit vorgegeben. Ein Bediener kann mithilfe der Ausgleichsvorrichtung die Ausgleichsgewichte anbringen. Ein Vorteil des erfindungsgemäßen Verfahrens ist, dass einem Bediener die Position mindestens einer Ausgleichsvorrichtung relativ zu den den Ausgleichsbereichen zugeordneten Ausgleichsebenen auf einer mit einer Steuereinheit datenaustauschend verbundenen Anzeigeeinheit angezeigt wird, bevor er die Ausgleichsvorrichtung verfährt und den Ausgleich vornimmt. Ein an der Ausgleichsvorrichtung festgelegter Sensor erfasst Positionsdaten und leitet die Positionsdaten an die Steuereinheit, die die Position der Ausgleichsvorrichtung relativ zu den Ausgleichsbereichen ermittelt. Die Anzeigeeinheit kann zum Beispiel als Bildschirm an der Auswerteeinheit und/oder der Ausgleichsvorrichtung angeordnet sein. Auch ein sonstiger Standort der Anzeigeeinheit an der Unwuchtmessvorrichtung kann vorteilhaft sein. Aufgrund der Positionsermittlung der Ausgleichsvorrichtung relativ zu den Ausgleichsbereichen und deren Anzeige auf der Anzeigeeinheit, kann der Bediener in Abhängigkeit des momentanen Standorts der Ausgleichsvorrichtung entscheiden, welchen der angezeigten Ausgleichsbereiche er zuerst anfährt. Hierdurch wird die Arbeit ergonomischer, da der Bediener die Ausgleichsvorrichtung nicht unnötig verfahren muss und die Reihenfolge der Anbringung der Ausgleichsgewichte eigenständig entscheiden kann, so dass für den Ausgleich weniger Zeit benötigt wird. Außerdem ist es nicht mehr notwendig, die Ausgleichsbereiche manuell zu markieren, indem die Verfahrbarkeit der Ausgleichsvorrichtung durch gesetzte Endanschläge begrenzt wird. Vorteilhafterweise ist vorgesehen, dass die Steuereinheit die Position der Ausgleichsvorrichtung relativ zu der in der Lagereinrichtung aufgenommenen Welle ermittelt und die ermittelte Position auf der Anzeigeeinheit angezeigt wird. Dies kann insbesondere bei längeren Wellen von Vorteil sein, wo die Ausgleichsbereich an entgegengesetzten Enden der Welle liegen. Hierdurch wird der Bediener über die noch zu verfahrene Strecke bis zu dem nächsten Ausgleichsbereich informiert. Dies ist insbesondere dann vorteilhaft, wenn dem Bediener mehrere Ausgleichsvorrichtungen zur Verfügung stehen. Da die Positionen der Ausgleichsvorrichtungen und deren Position relativ zu den Ausgleichsbereichen auf der Anzeigeeinheit dargestellt werden, kann der Bediener entscheiden, welche Ausgleichsvorrichtung einem gewählten Ausgleichsbereich am nächsten ist.

Die Ausgleichsvorrichtung wird nach der Anzeige der Ausgleichsbereiche und der Wahl eines Ausgleichsbereichs in diesen verfahren, wobei der von der Ausgleichsvorrichtung angefahrene Ausgleichsbereich und die diesem zugehörige Ausgleichsmasse auf der Anzeigeeinheit angezeigt wird. Diesbezüglich ist es vorteilhaft, wenn die Anzeigeeinheit an der Ausgleichsvorrichtung oder zumindest in deren Nähe angeordnet ist, so dass der Bediener die Anzeigeeinheit während des Verfahrens der Ausgleichsvorrichtung einsehen kann. Sobald sich die Ausgleichsvorrichtung in dem gewählten Ausgleichsbereich befindet, wird die Befestigungsvorrichtung mit einem der angezeigten Ausgleichsmasse entsprechenden Ausgleichsgewicht bestückt und der Vorgang zur Befestigung des Ausgleichsgewichts an der Welle kann initiiert werden. Es kann vorteilhaft sein, dass die Welle bei Schritt d. in die errechnete Winkelposition zur Anbringung des Ausgleichsgewichts gedreht wird. Der Sensor ermittelt insbesondere kontinuierlich die Position der Ausgleichsvorrichtung, so dass die Steuereinheit aufgrund der von dem Sensor übermittelten Positionsdaten und der von der Auswerteeinheit vorgegebenen Ausgleichsbereiche errechnen kann, wenn die Ausgleichsvorrichtung in dem gewählten Ausgleichsbereich positioniert ist. Die Steuereinheit kann dann die Welle in die errechnete Winkelposition zur Anbringung des Ausgleichsgewichts drehen. Die Drehung der Welle in die errechnete Winkelposition kann jedoch auch manuell von dem Bediener durchgeführt oder während einem sonstigen Schritt des Verfahrens vollzogen werden. Ferner kann vorteilhaft sein, dass beim Verfahren der Ausgleichsvorrichtung eine Bewegungsrichtung erfasst wird und dass mittels der Steuereinheit die Welle in die Winkelposition gedreht wird, die für die Anbringung eines Ausgleichsgewichts in dem in der Bewegungsrichtung liegenden, der Ausgleichsvorrichtung benachbarten Ausgleichsbereich bestimmt ist.

Es ist nicht mehr erforderlich, dass der Bediener während dem Verfahren der Ausgleichsvorrichtung die an der Unwuchtmessvorrichtung angebrachte Anzeigeeinheit zur Rate zieht, so dass ein kontinuierlicher Vorgang sichergestellt ist, der ohne wesentliche Unterbrechungen ablaufen kann. Hierdurch kann die Genauigkeit der Positionierung der Ausgleichsgewichte verbessert werden. Ein weiterer Vorteil ist, dass die für das Verfahren der Ausgleichsvorrichtung und das Anbringen des Ausgleichsgewichts notwenige Zeitdauer verringert wird, da der Bediener alle notwendigen Informationen der Anzeigeeinheit entnehmen kann.

Sofern weitere Ausgleichsgewichte an die Welle angebracht werden sollen, können die Schritte d. bis f. zur Anbringung weiterer Ausgleichsgewichte in weiteren Ausgleichsbereichen oder Ausgleichsebenen wiederholt werden, wobei die Reihenfolge der Anbringung der Ausgleichsgewichte wählbar ist. Die Anzeigeeinheit stellt nach der Bestimmung der Unwucht die für den Ausgleich der Unwucht in den Ausgleichsbereichen anzubringenden Ausgleichsmassen dar. Die Reihenfolge der Anbringung der Ausgleichsgewichte ist frei wählbar.

Um sicherzustellen, dass das Ausgleichsgewicht in dem von der Auswerteeinheit vorgegebenen Ausgleichsbereich angebracht wird, kann vorgesehen sein, dass die Befestigung des Ausgleichsgewichts an der Welle nur erfolgt, wenn sich die Position der Ausgleichsvorrichtung innerhalb des von der Auswerteeinheit vorgegebenen Ausgleichsbereichs befindet. Hierdurch können Fehlbefestigungen der Ausgleichsgewichte vermieden werden.

In einer Ausgestaltung ist vorgesehen, dass der an der Ausgleichsvorrichtung festgelegte Sensor an der Unwuchtmessvorrichtung, insbesondere dem Maschinenbett angeordnete Positionsdaten erfasst. Die Positionsdaten können als Skala ausgestaltet sein, die von dem Sensor erfasst wird. Der Sensor kann insbesondere ein Lasersensor sein, der an einem Grundkörper der Ausgleichsvorrichtung befestigt ist. Vorteilhafterweise ist der Sensor in einer Ebene mit der Befestigungsvorrichtung angeordnet.

Es ist vorgesehen, dass die Befestigung des Ausgleichsgewichts und die Bewegung der Ausgleichsvorrichtung durch Schalter an einer an der Ausgleichsvorrichtung angeordneten Steuereinrichtung insbesondere einer Griffgarnitur initiiert werden. An der Ausgleichsvorrichtung kann eine Steuereinrichtung befestigt sein, die zum Beispiel als Griffgarnitur ausgestaltet ist. An der Steuereinrichtung können Schalter angeordnet sein, die durch Betätigung eine automatische Bewegung der Ausgleichsvorrichtung bewirken. Es kann jedoch auch vorgesehen sein, dass die Ausgleichsvorrichtung mithilfe der Steuereinrichtung manuell bewegt wird.

Die Erfindung betrifft in einem weiteren Aspekt eine Ausgleichsvorrichtung zur Anbringung eines Ausgleichsgewichts in einem vorgegebenen einer Ausgleichsebene zugeordneten Ausgleichsbereich einer Welle, mit einer über eine Steuereinheit steuerbaren Befestigungsvorrichtung, die an einem freien Ende eine erste und eine zweite Aufnahme für ein Ausgleichsgewicht oder die Welle aufweist und einem Schlitten, der derart an der Ausgleichsvorrichtung angeordnet ist, dass die Ausgleichsvorrichtung in axialer Richtung entlang der Welle verfahrbar ist, wobei die Ausgleichsvorrichtung über einen Sensor zur Ermittlung der Position der Ausgleichsvorrichtung relativ zur der Welle verfügt und dass die Ausgleichsvorrichtung eine mit der Steuereinheit datenaustauschend verbundene Anzeigeeinheit umfasst, die derart ausgestaltet ist, dass die Position der Ausgleichsvorrichtung relativ zu dem Ausgleichsbereich anzeigbar ist. Die Ausgleichsvorrichtung kann als mobile Einheit ausgestaltet sein, die von einem Bediener manuell bedient wird. Die Position der Ausgleichsvorrichtung wird durch den Sensor ermittelt und nach Verarbeitung durch die Steuereinheit auf der Anzeigeeinheit wiedergegeben. Der Bediener kann die Anzeigeeinheit während des Verfahrens und des Ausgleichs einsehen, ohne die Bedienung der Ausgleichsvorrichtung unterbrechen zu müssen. Hierdurch werden nicht nur die Arbeitsbedingungen des Bedieners der Ausgleichsvorrichtung verbessert, sondern auch die Genauigkeit der Befestigung der Ausgleichsgewichte.

Die Anzeigeeinheit verfügt insbesondere über Mittel zum kabellosen oder kabelgebundenen Datenaustausch mit der Steuereinheit. Eingaben, die der Bediener über die Anzeigeeinheit vornimmt, werden somit an die Steuereinheit übermittelt und Daten der Steuereinheit an die Anzeigeeinheit gesendet. Die Mittel können Hardwareschnittstellen sein, die die Herstellung einer Funknetzverbindung oder einer kabelgebundenen Verbindung ermöglichen. Die von dem Sensor erfassten Positionsdaten werden an die Steuereinheit kabellos oder kabelgebunden geleitet und die Steuereinheit errechnet hieraus mit einer entsprechenden Software die Position der Ausgleichsvorrichtung. Um zudem die Position der Ausgleichsvorrichtung relativ zu der Welle beziehungsweise zu den Ausgleichsbereichen zu ermitteln, verfügt die Steuereinheit vorteilhafterweise über Mittel zum kabellosen oder kabelgebundenen Datenaustausch mit einer an der Auswuchtmaschine angeordneten Auswerteeinheit. Hierdurch können auch Informationen über die für den Ausgleich der Unwucht notwendige Ausgleichsmasse, beziehungsweise über das Ausgleichsgewicht an die Steuereinheit und gegebenenfalls von dieser an die Anzeigeeinheit gesendet werden. Die Steuereinheit errechnet unter Heranziehung der erhaltenen Daten die Position der Ausgleichsvorrichtung relativ zu der Welle, beziehungsweise relativ zu den den vorgegebenen Ausgleichsbereichen zugeordneten Ausgleichsebenen. Die Positionen werden dann an die Anzeigeeinheit gesendet, die diese dann entsprechend darstellt. Eine kabellose Übermittlung der Daten von der Auswerteeinheit zu der Steuereinheit und von der Steuereinheit zu der Anzeigeeinheit ist vorteilhaft, da sich hierdurch nur geringe oder keine Einschränkungen beim Verfahren der Ausgleichsvorrichtung ergeben.

Es wird vorgeschlagen, dass die Anzeigeeinheit an der Ausgleichsvorrichtung, insbesondere dem Grundkörper der Ausgleichsvorrichtung angeordnet ist. Die Anzeigeeinheit kann im Sinne der Erfindung auch als eine Benutzerschnittstelle der Steuereinheit bezeichnet werden. Die Anzeigeeinheit kann als Bildschirm ausgestaltet sein, der über Bedienelemente bedienbar ist. Die Bedienelemente können um den Bildschirm herum angeordnet sein. Die Anzeigeeinheit kann jedoch auch als berührungssensitiver Bildschirm oder Touchscreen ausgestaltet sein, so dass die Notwendigkeit für Bedienelemente entfällt. Ferner kann es vorteilhaft sein, dass an der Ausgleichsvorrichtung eine Aufnahme für die Anzeigeeinheit vorgesehen ist, aus der die Anzeigeeinheit herausnehmbar und in die die Anzeigeeinheit einbringbar ist. Diesbezüglich ist es vorteilhaft, wenn die Anzeigeeinheit als mobile Computereinheit, insbesondere als Tablet-Computer, ausgestaltet ist. Der Bediener kann die Anzeigeeinheit aus der Aufnahme entnehmen und sich von der Ausgleichsvorrichtung entfernen und weiterhin Eingaben an der Anzeigeeinheit vornehmen oder Informationen über diese abrufen.

Ferner wird vorgeschlagen, dass die Aufnahmen über eine an der Befestigungsvorrichtung angeordnete und mit der Steuereinheit verbundene Steuereinrichtung in eine offene oder eine geschlossene, an der Welle anliegende Position bringbar sind. Über die Steuereinrichtung kann auch die Ausgleichsvorrichtung manuell bewegt werden. An der Steuereinrichtung können zudem Schalter angeordnet sein, über die der Befestigungsvorgang des Ausgleichsgewichts initiiert werden kann. Ferner wird vorgeschlagen, dass die Steuereinrichtung als Griffgarnitur mit Schaltern ausgestaltet ist. Der Bediener kann mithilfe der Schalter im Wesentlichen alle Aktionen der Ausgleichsvorrichtung steuern und somit auch die Befestigung des Ausgleichsgewichts durch die Befestigungsvorrichtung initiieren oder das Verfahren der Ausgleichsvorrichtung über diese steuern.

Es wird vorgeschlagen, dass die Ausgleichsvorrichtung auf einer längs zu der in einer Unwuchtmessvorrichtung angeordneten Welle verlaufenden Führungsschiene bewegt wird. Die Ausgleichsvorrichtung weist insbesondere einen Schlitten auf, der an einem Grundkörper der Ausgleichsvorrichtung angebracht ist. Es kann auch vorgesehen sein, dass die Ausgleichsvorrichtung motorunterstützt bewegt wird. Das Bewegen der Ausgleichsvorrichtung kann hierdurch wesentlich vereinfacht werden. Die Ausgleichsvorrichtung kann derart ausgestaltet sein, dass das Ausgleichsgewicht durch Kleben oder Schweißen an der Welle angebracht werden kann. Die Aufnahmen der Befestigungsvorrichtung sind dann entsprechend ausgestaltet. Vorteilhafterweise kann auch eine bestehende Ausgleichsvorrichtung mit einer Anzeigeeinheit, einer mit dieser verbundenen Steuereinheit und einem Sensor zur Ermittlung der Position der Ausgleichsvorrichtung nachgerüstet werden.

Die Erfindung wird nachfolgend anhand von Ausführungsbeispielen der Erfindung näher erläutert, die in der Zeichnung dargestellt sind. Es zeigen
- Figur 1: eine perspektivische Ansicht einer bevorzugten Ausgleichsvorrichtung mit geöffneten Zangeneinheiten,
- Figur 2: eine Seitenansicht der Figur 1,
- Figur 3: eine Seitenansicht einer bevorzugten Ausgleichsvorrichtung mit geschlossenen Zangeneinheiten,
- Figur 4: eine schematische Darstellung einer bevorzugten Ausgleichsvorrichtung zur Anbringung von Ausgleichsgewichten,
- Figur 5: schematische Ansicht einer Welle mit Ausgleichbereichen auf einer Anzeigeeinheit und
- Figur 6: eine weitere schematische Ansicht einer Welle mit Ausgleichbereichen auf einer Anzeigeeinheit.

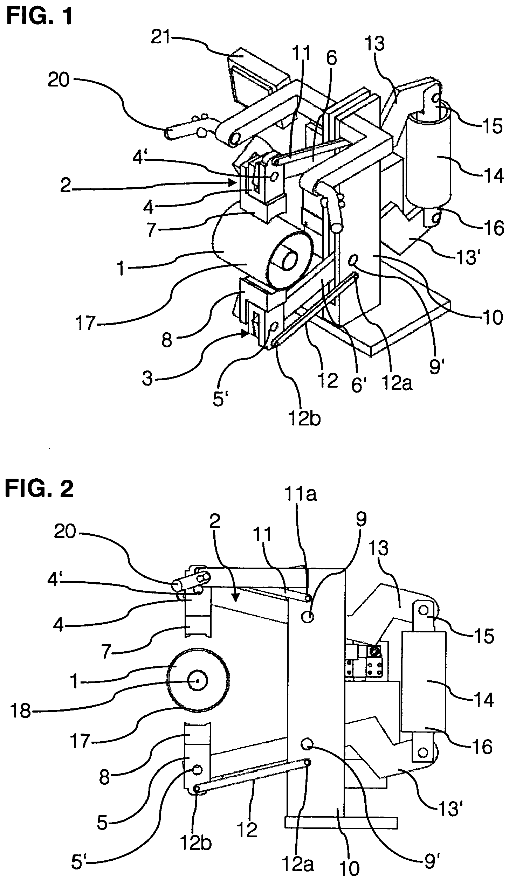

Die in den Figuren 1 bis 3 gezeigte Vorrichtung zur Anbringung eines Ausgleichsgewichts an einer Welle 1 umfasst eine Befestigungsvorrichtung mit Zangeneinheiten 2, 3. Eine obere Zangeneinheit 2 weist ein oberes Aufnahmeteil 4 und eine untere Zangeneinheit 3 weist ein unteres Aufnahmeteil 5 auf. Die Befestigungsvorrichtung ist in den Figuren beispielhaft als zangenartige Einrichtung mit Zangeneinheiten 2, 3 dargestellt, wobei auch sonstige Ausgestaltungen der Befestigungsvorrichtung von der Erfindung umfasst sind. Die Aufnahmeteile 4, 5 sind an den ersten Hebelenden 6, 6' der Zangeneinheiten 2, 3 angeordnet. Ein oberes Aufnahmeteil 4 weist eine obere Aufnahme 7 und ein unteres Aufnahmeteil 5 eine untere Aufnahme 8 auf, wobei jeweils eine Aufnahme 7, 8 für die Aufnahme des Ausgleichsgewichts oder der Welle 1 vorgesehen ist. Die Aufnahmeteile 4, 5 können auch derart ausgestaltet sein, dass mehrere Aufnahmen für Ausgleichsgewichte befestigbar sind, wobei in den Figuren exemplarisch jeweils ein Aufnahmeteil 4, 5 mit lediglich einer Aufnahme 7, 8 dargestellt ist. Die Aufnahmeteile 4, 5 sind an den Hebelarmen drehbar gelagert, wobei das obere Aufnahmeteil 4 über einen Lagerpunkt 4' an der oberen Zangeneinheit 2 und das untere Aufnahmeteil 5 über einen Lagerpunkt 5' an der unteren Zangeneinheit 3 drehbar gelagert ist. Die Lagerpunkte 4', 5' der Aufnahmeteile 4, 5 an den Hebelarmen könnten beispielsweise als stiftartige Verbindungsmittel, Bolzen oder eine entsprechende Lagerung ausgebildet sein. Als Lagerpunkte 4', 5' werden im Sinne der Erfindung insbesondere die Mitten der drehbeweglichen Lagerungen angesehen.

In der in der Zeichnung gezeigten beispielhaften Ausgestaltung der Ausgleichsvorrichtung sind die Zangeneinheiten 2, 3 als zweiarmige Hebel ausgestaltet, die jeweils um einen Hebeldrehpunkt 9, 9' drehbar an einem Grundkörper 10 gelagert sind. Die Lagerung der Zangeneinheiten 2, 3 an dem Grundkörper 10 kann über bekannte Lagerungsmittel, wie beispielsweise Bolzen, erfolgen. Im Sinne der Erfindung bezeichnen die Hebeldrehpunkte 9, 9' insbesondere die Mitten der drehbeweglichen Lagerungen. An dem Grundkörper 10 sind ferner zwei Führungsstäbe 11, 12 befestigt. Hierbei ist der erste Führungsstab 11 mit seinem ersten Ende über einen Anlenkpunkt 11a an dem Grundkörper 10 und mit seinem zweiten Ende über einen Anlenkpunkt 11b an dem Aufnahmeteil 4 der oberen Zangeneinheit 2 drehbar gelagert. Der zweite Führungsstab 12 ist mit seinem ersten Ende über einen Anlenkpunkt 12a an dem Grundkörper 10 und mit seinem zweiten Ende über einen Anlenkpunkt 12b an dem Aufnahmeteil 5 der unteren Zangeneinheit 3 drehbar gelagert. Als Anlenkpunkte 11a, 12a, 11b, 12b werden im Sinne der Erfindung insbesondere die Mitten der drehbeweglichen Lagerungen angesehen.

An den ersten Hebelenden 6, 6' der Zangeneinheiten 2, 3 entgegengesetzten zweiten Hebelenden 13, 13' sind die als Hebel ausgestalteten Zangeneinheiten 2, 3 über einen Hubzylinder 14 miteinander verbunden. Das zweite Hebelende 13, 13' jeder Zangeneinheit 2, 3 kann zu dem ersten Hebelende 6, 6' abgewinkelt sein, um beispielsweise die Befestigung von Hubzylindern unterschiedlicher Größe an den Zangeneinheiten 2, 3 zu ermöglichen. Hierbei ist die obere Zangeneinheit 2 an dem Kolben 15 des Hubzylinders 14 und die untere Zangeneinheit 3 an dem Zylinder 16 des Hubzylinders 14 drehbar befestigt. Der Hubzylinder 14 kann als Pneumatikzylinder oder Hydraulikzylinder ausgestaltet sein. Eine Druckbeaufschlagung des Hubzylinders 14 bewirkt, dass die zweiten Hebelenden 13, 13' der Zangeneinheiten 2, 3 auseinander gedrückt werden und folglich sich der Abstand der Aufnahmen 7, 8 verringert, bis schließlich die Aufnahmen 7, 8 gemeinsam zur Anlage an der Oberfläche 17 der Welle 1 kommen. Die Aufnahmen 7, 8 der Zangeneinheiten 2, 3 können jedoch auch mittels einer elektromotorischen Vorschubeinheit bis zur Anlage an der Welle 1 gebracht werden, so dass die Hebelenden 13, 13' entsprechend mit einer solchen Einheit verbunden sind. Ein gegebenenfalls notwendiger Gewichtsausgleich kann über einen an die zangenartige Einrichtung angeschlossenen Pneumatikzylinder erfolgen.

Ausgleichsgewichte können durch Kleben oder Schweißen an der Welle 1 befestigt werden. Die Aufnahmen 7, 8 für das Ausgleichsgewicht oder die Welle 1 sind von der Form her dem Wellenumfang angepasst und konkav gekrümmt ausgestaltet. Auch die Form der Ausgleichsgewichte ist in der Regel konkav gekrümmt. Die Zangeneinheiten 2, 3 sind in offene, in einer Ebene mit der Rotationsachse 18 liegende Endanschlagspositionen verschiebbar, die in den Figuren 1 und 2 dargestellt sind. Die Vorrichtung kann für verschiedene Wellendurchmesser ausgestaltet sein. In den Figuren ist exemplarisch ein Wellenausschnitt mit einem kleineren und einem größeren Wellendurchmesser gezeigt.

Um eine Unwucht einer Welle 1 zu bestimmen und einen Unwuchtausgleich vorzunehmen, wird die auszuwuchtende Welle 1 um die Rotationsachse 18 drehbar in Lagereinrichtungen an einem Maschinenbett einer Unwuchtmessvorrichtung der Wellenauswuchtmaschine gelagert und mithilfe eines Antriebs um die Rotationsachse 18 gedreht. Sensoren, wie zum Beispiel Abstandssensoren, erfassen das Drehverhalten der Welle 1 und leiten Messdaten an eine Auswerteeinheit weiter, die dann eine gegebenenfalls vorliegende Unwucht und entsprechend Ausgleichsmassen und Winkelpositionen für wenigstens zwei jeweils einem vorgegebenen Ausgleichsbereich zugeordnete Ausgleichsebenen berechnet. Der Ausgleichsbereich bezeichnet einen von einem Hersteller vorgegebenen und Rotortyp-abhängigen Bereich der Welle, der die Ausgleichsebene mit entsprechenden Toleranzen für die Anbringung des Ausgleichsgewichts umfasst. Die Ausgleichsebene umfasst insbesondere auch den Ausgleichsort. Der Ausgleich der Unwucht, das heißt die Anbringung des Ausgleichsgewichts in der Ausgleichsebene, erfolgt mit der erfindungsgemäßen Vorrichtung. Die Vorrichtung kann als separate Einheit in die Auswuchtmaschine integriert und manuell bedienbar ausgestaltet sein.

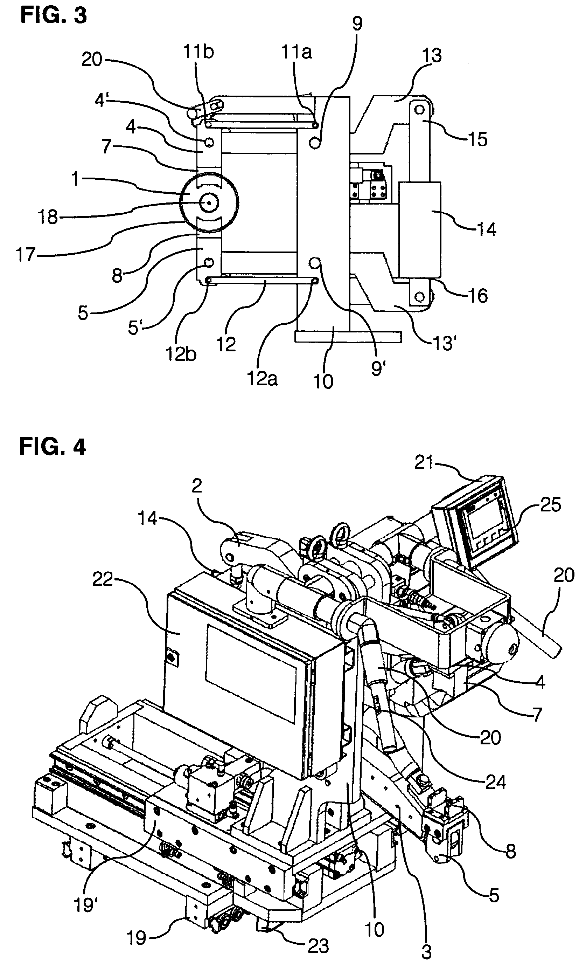

Um die Vorrichtung in den jeweiligen Ausgleichsbereich verschieben zu können, ist - wie in Figur 4 gezeigt - die Vorrichtung auf einem ersten bewegbaren Führungsschlitten 19 gelagert, so dass die Vorrichtung in Wellenlängsrichtung verschiebbar ist. Der Führungsschlitten 19 kann auf einer längs zur Rotationsachse 18 verlaufenden Führungsschiene verschiebbar gelagert sein. Der Führungsschlitten 19 ist an dem Grundkörper 10 der Vorrichtung angebracht. Ferner ist die Vorrichtung quer zur Rotationsachse 18 verschiebbar oder verlagerbar, um eine Einlagerung der Welle 1 in die Lagereinrichtung und ihre Entnahme aus dieser zu ermöglichen. Hierfür weist die Vorrichtung einen weiteren Führungsschlitten 19' auf, der quer zu dem ersten Führungsschlitten 19 angeordnet ist.

Die Vorrichtung ist mit einer als Griffgarnitur 20 ausgestalteten Steuereinrichtung ausgestattet, die zum manuellen Positionieren der Vorrichtung und zur Bedienung der Vorrichtung genutzt wird. Ein Bediener bewegt die Vorrichtung mithilfe der Griffgarnitur 20 zum Ausgleichsbereich, wobei die Positionierung luftunterstützt oder motorunterstützt sein kann, um die Verschiebung der Vorrichtung zu vereinfachen.

An der Vorrichtung ist eine Anzeigeeinheit 21 angeordnet, die mit einer Steuereinheit 22 datenaustauschend verbunden ist, über die eine Steuerung der Ausgleichsvorrichtung mithilfe der Griffgarnitur 20 möglich ist. Es kann jedoch eine weitere Anzeigeeinheit 21 an der oder in Nähe zu der Auswerteeinheit angebracht sein. Ferner kann die Anzeigeeinheit 21 auch an einer sonstigen Position der Auswuchtmaschine angeordnet sein. Nachdem die Messung der Unwucht erfolgt ist, wird die Position mindestens einer Ausgleichsvorrichtung relativ zu den den Ausgleichsbereichen zugeordneten Ausgleichsebenen auf der mit der Steuereinheit 22 datenaustauschend verbundenen Anzeigeeinheit 21 angezeigt. Die Steuereinheit 22 ist datenaustauschend mit der an der Auswuchtmaschine angeordneten Auswerteeinheit verbunden und verfügt über Mittel zur kabellosen oder kabelgebundenen Kommunikation. Hierbei kann es sich zum Beispiel um eine WLAN-Schnittstelle, eine sonstige Funknetzschnittstelle oder eine kabelgebundene Schnittstelle handeln. Ein an der Ausgleichsvorrichtung festgelegter Sensor 23 erfasst Positionsdaten und leitet die Positionsdaten an die Steuereinheit 22, die die Position der Ausgleichsvorrichtung relativ zu den Ausgleichsbereichen ermittelt. Ein Bediener kann somit vor dem eigentlichen Verfahren der Ausgleichsvorrichtung bereits auf einer Anzeigeeinheit 21, zum Beispiel einer der Auswerteeinheit zugehörigen Anzeigeeinheit 21, die Position mindestens einer Ausgleichsvorrichtung relativ zu den den Ausgleichsbereichen zugeordneten Ausgleichsebenen erkennen. Dies ist insbesondere dann von Vorteil, wenn an der Welle 1 mehrere Ausgleichsbereiche vorgesehen und ggf. mehrere Ausgleichsvorrichtungen entlang der Welle angeordnet sind. Der Bediener kann zum Beispiel den einer Ausgleichsvorrichtung am nächsten liegenden Ausgleichsbereich wählen und einen ersten Ausgleich durchführen. Auch die Reihenfolge der anzufahrenden Ausgleichsbereiche kann der Bediener frei wählen.

Anschließend wird die Ausgleichsvorrichtung in den ersten ausgewählten Ausgleichsbereich verfahren, wobei der von der Ausgleichsvorrichtung angefahrene Ausgleichsbereich und der diesem zugehörigen Ausgleichsmasse auf der Anzeigeeinheit 21 angezeigt werden. Die für den Ausgleich der Unwucht von der Auswerteeinheit vorgegebene Ausgleichsmasse beziehungsweise Informationen über das notwendige auf die Welle 1 aufzubringende, Ausgleichsgewicht, werden von der Auswerteeinheit an die Steuereinheit 22 übermittelt und ebenfalls als Information auf der Anzeigeeinheit 21 angezeigt. Ein Bediener kann somit direkt an der Anzeigeeinheit 21 ablesen, welches Ausgleichsgewicht er für den angefahrenen Ausgleichsbereich benötigt wird und mit welchem Ausgleichsgewicht eine der Aufnahmen 7, 8 zu bestücken ist. Die Anzeigeeinheit 21 ist eine elektrisch angesteuerte Anzeige zur optischen Signalisierung von veränderlichen Informationen wie Bildern oder Zeichen. Die Anzeigeeinheit 21 ist datenaustauschend mit der Steuereinheit 22 verbunden und weist hierfür notwendige Hardwareschnittstellen auf, die eine kabellose oder kabelgebundene Kommunikation mit der Steuereinheit 22 ermöglichen. Die Anzeigeeinheit 21 kann auch als berührungssensitiver Bildschirm ausgestaltet sein. Die Anzeigeeinheit 21 kann als selbstständige und einen Mikroprozessor aufweisende Computereinheit ausgestaltet sein. Es kann jedoch auch vorgesehen sein, dass die Anzeigeeinheit 21 als Benutzerschnittstelle der Steuereinheit 22 vorgesehen ist und somit lediglich die von der Steuereinheit 22 bereitgestellten Daten oder Informationen bildlich wiedergibt.

Der an der Ausgleichsvorrichtung festgelegter Sensor 23 erfasst an der Unwuchtmessvorrichtung angezeigte Positionsdaten und leitet die Positionsdaten an die beispielsweise an der Ausgleichsvorrichtung angeordnete Steuereinheit 22 weiter. Die Steuereinheit 22 verarbeitet die erhaltenen Positionsdaten mittels einer entsprechenden Software. Die errechnete Position der Ausgleichsvorrichtung relativ zu den den Ausgleichsbereichen zugeordneten Ausgleichsebenen und gegebenenfalls die Position der Ausgleichsvorrichtung relativ zu der in der Lagereinrichtung der Unwuchtmessvorrichtung aufgenommenen Welle 1 werden auf der Anzeigeeinheit 21 angezeigt. Die von dem Sensor 23 erfassten Positionsdaten können Wegmarken sein, die als Skala auf dem Maschinenbett angeordnet sind. Der Sensor 23 ist als Lasersensor ausgestaltet und in einer Ebene mit den Aufnahmen 7, 8 an dem Grundkörper 10 befestigt. Es kann auch vorgesehen sein, dass mehrere Sensoren 23 an der Ausgleichsvorrichtung angebracht sind. Zusätzlich zu dem Sensor 23 kann ein an der Ausgleichsvorrichtung angeordneter Zeiger die Position der Ausgleichsvorrichtung auf der Skala markieren, wobei die Position von dem Bediener leicht abgelesen werden kann.

Eine Skalierung des Sensors 23 kann derart erfolgen, dass sich das Signal des Sensors 23 mit der Bewegung der Ausgleichsvorrichtung in eine Richtung weg von einem gewählten Null-Punkt, der zum Beispiel an einer der Lagereinrichtungen liegen kann, erhöht und zu dem Null-Punkt hin erniedrigt. Hierdurch kann eine Bewegungsrichtung der Ausgleichsvorrichtung ermittelt werden. Die für die Berechnung der Position notwendigen Informationen über die unwuchtbehaftete Welle 1, zum Beispiel Typenbezeichnung, Länge und Durchmesser der Welle 1, Länge und Position der Ausgleichsbereiche und Position der Ausgleichsebenen, werden von der Auswerteeinheit an die Steuereinheit 22 übermittelt. Es kann jedoch auch vorteilhaft sein, wenn die notwendigen Informationen über die Steuereinheit 22 eingegeben werden. Eine entsprechende Software auf der Steuereinheit 22 verarbeitet die Informationen und errechnet aus den ermittelten Positionsdaten des Sensor 23 die Position der Ausgleichsvorrichtung in Bezug zu der Welle 1 und zu den Ausgleichsebenen beziehungsweise zu den Ausgleichsbereichen.

Die Ausgleichsvorrichtung kann mithilfe der an der Griffgarnitur 20 angebrachten Schalter 24 bewegt oder elektromotorisch verfahren werden, da die als Griffgarnitur 20 ausgestaltete Steuereinrichtung mit der Steuereinheit 22 zur Steuerung der Ausgleichsvorrichtung datenaustauschend verbunden ist. Über die Schalter 24 der Griffgarnitur 20 kann auch der Schweißvorgang zur Anbringung des Ausgleichsgewichts gestartet werden.

Die Anzeige der Anzeigeeinheit 21 wird automatisch vergrößert, sobald der Bediener die Ausgleichsvorrichtung in den vorgegebenen und gewählten Ausgleichsbereich verfährt, so dass die auf der Anzeigeeinheit 21 dargestellten Informationen für den Bediener auch aus größerer Entfernung gut ablesbar sind. Zudem kann der Bediener hierdurch schnell erfassen, dass sich die Ausgleichsvorrichtung im Ausgleichsbereich befindet. Der Bediener kann über an der Anzeigeeinheit 21 angeordnete Bedienelemente 25 die Anzeigeeinheit 21 bedienen und beispielsweise über ein Menü die auf der Anzeige darzustellenden Informationen auswählen.

Da der Sensor 23 insbesondere kontinuierlich die Position der Ausgleichsvorrichtung bestimmt, kann die Steuereinheit 22 berechnen, wann sich die Ausgleichsvorrichtung in dem gewählten Ausgleichsbereich befindet. Hierdurch kann die Welle 1 automatisch in die von der Auswerteeinheit zur Anbringung des Ausgleichsgewichts errechnete Winkelposition gedreht werden, wenn sich die Position der Ausgleichsvorrichtung in dem gewählten Ausgleichsbereich befindet. Es kann jedoch vorgesehen sein, dass das Eindrehen der Welle 1 vor oder während einem anderen Verfahrensschritt automatisch erfolgt oder manuell durch den Bediener durchgeführt wird. Ferner kann das Eindrehen der Welle 1 auch in Abhängigkeit der Bewegungsrichtung der Ausgleichsvorrichtung erfolgen, so dass die Welle 1 automatisch in die jeweilige Winkelposition eingedreht wird, wenn sich die Ausgleichsvorrichtung ausgehend von einem Ausgangspunkt in die Richtung des gewählten Ausgleichsbereichs bewegt, Hierbei wird die Welle 1 mittels der Steuereinheit 22 in die Winkelposition gedreht, die für die Anbringung eines Ausgleichsgewichts in dem in der Bewegungsrichtung liegenden, der Ausgleichsvorrichtung benachbarten Ausgleichsbereich bestimmt ist. Auch die einem Ausgleichsbereich zugehörige Ausgleichsmasse kann auf der Anzeigeeinheit 21 angezeigt werden, sobald die Ausgleichsvorrichtung in den entsprechenden und ausgewählten Ausgleichsbereich verfährt.

Sobald die Ausgleichsvorrichtung positioniert und in der einem Ausgleichsbereich zugeordneten Ausgleichsebene arretiert ist, kann der Bediener die Befestigungsvorrichtung mit einem der angezeigten Ausgleichsmasse entsprechenden Ausgleichsgewicht bestücken und ein Ausgleichsgewicht in die untere Aufnahme 8 oder gegebenenfalls auf die Welle 1 legen. Der Schweißvorgang kann durch die Schalter 24 an der Griffgarnitur 20 ausgelöst werden.

Der Schweißvorgang kann jedoch nur dann gestartet werden, wenn sich die Position der Ausgleichsvorrichtung innerhalb der von der Auswerteeinheit vorgegebenen Ausgleichsbereiche befindet. Ferner kann es vorteilhaft sein, wenn zusätzlich weitere zuvor definierte Bedingungen erfüllt sind. Die Bedingungen werden von der Steuereinheit in Datenaustausch mit der Auswerteeinheit verifiziert und entsprechend auf der Anzeigeeinheit 21 dargestellt. Die Anzeigeeinheit 21 an der Ausgleichsvorrichtung signalisiert dann dem Bediener, ob die Befestigung des Ausgleichsgewichts durch die Steuereinheit 22 freigegeben ist. Die Bedingungen, die für die Freigabe der Befestigung notwendig sein können, umfassen die korrekte Einspannung der Welle 1, Eindrehen der Welle 1 in die Winkelposition und/oder Positionierung der Ausgleichsvorrichtung innerhalb des vorgegebenen Ausgleichsbereichs. Ferner wird die Funktionsfähigkeit der Ausgleichsvorrichtung, insbesondere der Schweißvorrichtung überprüft. Sofern die Freigabe der Steuereinheit 22 vorliegt, kann der Bediener den Schweißvorgang initiieren. Die Anzeigeeinheit 21 kann zudem über visuelle und akustische Mittel verfügen, um dem Bediener optische und akustische Signale zu übermitteln. Beispielsweise kann dem Bediener die Freigabe durch ein grünes Blinklicht und ein entsprechendes akustisches Signal und das Auftreten einer Fehlermeldung durch ein rotes Blinklicht signalisiert werden.

Durch Betätigung der Schalter 24 schließen die Zangeneinheiten 2, 3 pneumatisch und schweißen. Das Ausgleichsgewicht in der unteren Aufnahme 8 wird gegen die Wellenoberfläche 17 gepresst und durch einen Schweißvorgang befestigt, wobei die untere und obere Aufnahme 7, 8 als Elektroden fungieren. Eine erfolgreiche Schweißung wird auf der Anzeigeeinheit 21 dargestellt. Falls die Befestigung nicht oder nicht vollständig durchgeführt werden konnte, kann eine Fehlermeldung dem Bediener über die Anzeigeeinheit 21 angezeigt werden. Nach erfolgter Schweißung öffnen die Zangeneinheiten 2, 3. Anschließend kann der Bediener die Vorrichtung entriegeln und bei Bedarf durch Bestätigung der Schalter 24 zum nächsten auf der Anzeigeeinheit 21 dargestellten Ausgleichsbereich verschieben, wobei die Reihenfolge der Anbringung der Ausgleichsgewichte vom Bediener frei wählbar ist. Sofern alle notwendigen Ausgleichsgewichte an der Welle 1 angebracht sind, wird ein Kontrollmesslauf durchgeführt, um den Ausgleich der Unwucht zu kontrollieren. Bei Bedarf können mithilfe der Vorrichtung dann weitere Ausgleichsgewichte an der Welle 1 angebracht werden. Ansonsten kann die Vorrichtung mithilfe des Führungsschlittens 19' verfahren werden, um die Welle 1 zu entnehmen und eine weitere, unwuchtbehaftete Welle in die Ausgleichsmaschine einzulagern.

Es versteht sich, dass anstelle der oder zusätzlich zu der dargestellten und beschriebenen Schweißeinrichtung auch andere bekannte Befestigungseinrichtungen, wie Klebeeinrichtungen, eingesetzt werden können. Es liegt ferner im Rahmen der Erfindung, die Vorrichtung zum Befestigen von Ausgleichsgewichten räumlich von der Auswuchtmaschine zu trennen, falls sich dies beispielsweise für eine Fertigungslinie als günstig herausstellen sollte. Die Welle wird dann von der Auswuchtmaschine in die Vorrichtung umgelagert, wobei Informationen über die ermittelte Unwucht beziehungsweise daraus resultierende Ausgleichsdaten weitergegeben werden.

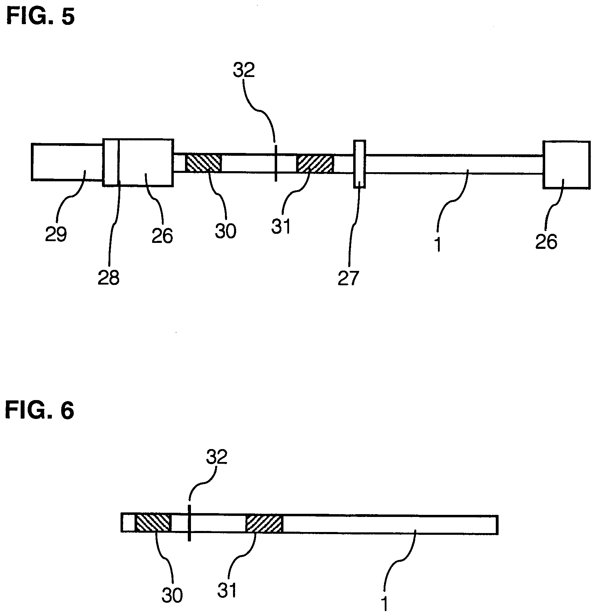

Figur 5 zeigt eine schematische Ansicht einer Welle mit Ausgleichbereichen auf einer Anzeigeeinheit. Nachdem die Unwucht der Welle 1 gemessen wurde, wird die Welle 1 auf der Anzeigeeinheit schematisch dargestellt, wobei die Anzeigeeinheit an der Auswuchtmaschine selbst und/oder an der oder in Nähe der Ausgleichsvorrichtung angeordnet sein kann. Die Darstellung umfasst neben der in einer Lagereinrichtung 26 gelagerten Welle 1 ein Mittenlager 27 und einen über einen Flansch 28 mit der Welle 1 verbundenen Antrieb 29. Ein erster Ausgleichsbereich 30 befindet sich in einem Rotortyp-abhängigen Abstand von dem Flansch 28. Ein zweiter Ausgleichsbereich 31 ist in einem Rotortyp-abhängigen Abstand zu dem Flansch 28 und dem ersten Ausgleichsbereich 30 angeordnet. Die Ausgleichsbereiche 30, 31 werden vom Hersteller der Welle 1 in der Regel vorgegeben und umfassen jeweils eine Ausgleichsebene. Die von dem Sensor erfasste und von der Steuereinheit errechnete Position einer Ausgleichsvorrichtung 32 wird als Balken dargestellt. Figur 5 zeigt eine umfangreichere Anzeige der Welle 1, wohingegen in Figur 6 eine einfache Darstellung der Welle 1 mit den Ausgleichsbereichen 30, 31 und der Ausgleichsvorrichtung 32 als Balken schematisiert ist. Da die Anzeigeeinheit dem Bediener die Position der Ausgleichsbereiche 30, 31 und die Position der Ausgleichsvorrichtung 32 anzeigt, kann der Bediener entscheiden, mit welchem Ausgleichsbereich 30, 31 er beginnen möchte. Diese Entscheidung kann beispielsweise durch die Position der Ausgleichsvorrichtung 32 beeinflusst werden, da beispielsweise die Ausgleichsvorrichtung 32 in Figur 5 näher zu dem Ausgleichsbereich 31 angeordnet ist, wohingegen die Ausgleichsvorrichtung 32 in Figur 6 näher zu dem Ausgleichsbereich 30 steht. Hat sich der Bediener entschieden, mit welchem Ausgleichsbereich er beginnen möchte, verfährt er die Ausgleichsvorrichtung 32 in den gewählten Ausgleichsbereich 30, 31. Da ebenfalls an der Ausgleichsvorrichtung 32 oder in deren Nähe eine Anzeigeeinheit angeordnet ist, wird auch während dem Verfahren der Ausgleichsvorrichtung 32 die momentane Position der Ausgleichsvorrichtung 32 relativ zu den Ausgleichsbereichen 30, 31 und relativ zu der Welle 1 auf der Anzeigeeinheit dargestellt. Der Bediener kann somit erkennen, wenn die Ausgleichsvorrichtung 32 in dem gewählten Ausgleichsbereich 30, 31 positioniert ist. Zudem wird auf der Anzeigeeinheit die für den Ausgleich notwendige Ausgleichsmasse und das entsprechende Ausgleichsgewicht für den angefahrenen beziehungsweise gewählten Ausgleichsbereich 30, 31 angezeigt. Ferner kann die Welle 1 auf die jeweilige Winkelposition automatisch eingedreht werden, wenn die Ausgleichsvorrichtung 32 den zugehörigen Ausgleichsbereich 30, 31 anfährt.

## Patentansprüche

1. Verfahren zur Anbringung von Ausgleichsgewichten an einer Welle (1) mit wenigstens einer Ausgleichsvorrichtung (32), die längs zu der in einer Unwuchtmessvorrichtung angeordneten Welle (1) verschiebbar ist und eine Befestigungsvorrichtung zur Befestigung der Ausgleichsgewichte an der Welle (1) aufweist, umfassend die Schritte:
a. Um eine Rotationsachse (18) drehbares Aufnehmen der Welle (1) in einer an einem Maschinenbett angeordneten Lagereinrichtung (26) der Unwuchtmessvorrichtung;
b. Drehen der Welle (1) um die Rotationsachse (18), Bestimmung der Unwucht der Welle (1) und Berechnen von Ausgleichsmassen und Winkelpositionen für wenigstens zwei jeweils einem vorgegebenen Ausgleichsbereich (30, 31) zugeordnete Ausgleichsebenen durch eine Auswerteeinheit;
c. Anzeige einer Position mindestens einer Ausgleichsvorrichtung (32) relativ zu den den Ausgleichsbereichen (30, 31) zugeordneten Ausgleichsebenen auf einer mit einer Steuereinheit (22) datenaustauschend verbundenen Anzeigeeinheit (21), wobei ein an der Ausgleichsvorrichtung (32) festgelegter Sensor (23) Positionsdaten erfasst und die Positionsdaten an die Steuereinheit (22) leitet, die die Position der Ausgleichsvorrichtung (32) relativ zu den Ausgleichsbereichen (30, 31) ermittelt;
d. Verfahren der Ausgleichsvorrichtung (32) in einen der angezeigten Ausgleichsbereiche (30, 31) und Anzeige des von der Ausgleichsvorrichtung (32) angefahrenen Ausgleichsbereichs (30, 31) und der diesem zugehörigen Ausgleichsmasse auf der Anzeigeeinheit (21);
e. Bestücken der Befestigungsvorrichtung mit einem der angezeigten Ausgleichsmasse entsprechenden Ausgleichsgewicht und
f. Initiieren des Vorgangs zur Befestigung des Ausgleichsgewichts an der Welle (1).

2. Verfahren nach Anspruch 1, **dadurch gekennzeichnet, dass** die Schritte d. bis f. zur Anbringung weiterer Ausgleichsgewichte in weiteren Ausgleichsbereichen oder Ausgleichsebenen wiederholt werden, wobei die Reihenfolge der Anbringung der Ausgleichsgewichte wählbar ist.

3. Verfahren nach Anspruch 1 oder 2, **dadurch gekennzeichnet, dass** die Befestigung des Ausgleichsgewichts an der Welle (1) nur erfolgt, wenn sich die Position der Ausgleichsvorrichtung (32) innerhalb des von der Auswerteeinheit vorgegebenen Ausgleichsbereichs (30, 31) befindet.

4. Verfahren nach einem der vorhergehenden Ansprüche, **dadurch gekennzeichnet, dass** die Steuereinheit (22) die Position der Ausgleichsvorrichtung (32) relativ zu der in der Lagereinrichtung (26) aufgenommenen Welle (1) ermittelt und die ermittelte Position auf der Anzeigeeinheit (21) angezeigt wird.

5. Verfahren nach einem der vorhergehenden Ansprüche, **dadurch gekennzeichnet, dass** der an der Ausgleichsvorrichtung (32) festgelegte Sensor (23) an der Unwuchtmessvorrichtung, insbesondere dem Maschinenbett angezeigte Positionsdaten erfasst.

6. Verfahren nach einem der vorhergehenden Ansprüche, **dadurch gekennzeichnet, dass** die Befestigung des Ausgleichsgewichts und die Bewegung der Ausgleichsvorrichtung (32) durch Schalter (24) an einer an der Ausgleichsvorrichtung (32) angeordneten Steuereinrichtung (20) insbesondere einer Griffgarnitur initiiert werden.

7. Verfahren nach einem der vorhergehenden Ansprüche, **dadurch gekennzeichnet, dass** die Welle (1) bei Schritt d. in die errechnete Winkelposition zur Anbringung des Ausgleichsgewichts gedreht wird.

8. Verfahren nach einem der vorhergehenden Ansprüche, **dadurch gekennzeichnet, dass** beim Verfahren der Ausgleichsvorrichtung (32) eine Bewegungsrichtung erfasst wird und dass mittels der Steuereinheit (22) die Welle (1) in die Winkelposition gedreht wird, die für die Anbringung eines Ausgleichsgewichts in dem in der Bewegungsrichtung liegenden, der Ausgleichsvorrichtung (32) benachbarten Ausgleichsbereich (30, 31) bestimmt ist.

9. Ausgleichsvorrichtung (32) zur Anbringung eines Ausgleichsgewichts in einem vorgegebenen einer Ausgleichsebene zugeordneten Ausgleichsbereich (30, 31) einer Welle (1), mit einer über eine Steuereinheit (22) steuerbaren Befestigungsvorrichtung, die an einem freien Ende (6, 6') eine erste und eine zweite Aufnahme (7, 8) für ein Ausgleichsgewicht oder die Welle (1) aufweist und einem Schlitten (19), der derart an der Ausgleichsvorrichtung (32) angeordnet ist, dass die Ausgleichsvorrichtung (32) in axialer Richtung entlang der Welle (1) verfahrbar ist, wobei die Ausgleichsvorrichtung (32) über einen Sensor (23) zur Ermittlung der Position der Ausgleichsvorrichtung (32) relativ zu der Welle (1) verfügt und dass die Ausgleichsvorrichtung (32) eine mit der Steuereinheit (22) datenaustauschend verbundene Anzeigeeinheit (21) umfasst, die derart ausgestaltet ist, dass die Position der Ausgleichsvorrichtung (32) relativ zu dem Ausgleichsbereich (30, 31) anzeigbar ist.

10. Vorrichtung (32) nach Anspruch 9, **dadurch gekennzeichnet, dass** die Steuereinheit (22) über Mittel zum kabellosen oder kabelgebundenen Datenaustausch mit einer an der Auswuchtmaschine angeordneten Auswerteeinheit verfügt.

11. Vorrichtung (32) nach Anspruch 9 oder 10, **dadurch gekennzeichnet, dass** die Anzeigeeinheit über Mittel zum kabellosen oder kabelgebundenen Datenaustausch mit der Steuereinheit (22) verfügt.

12. Vorrichtung (32) nach einem der vorhergehenden Ansprüche, **dadurch gekennzeichnet, dass** der Sensor (23) ein Lasersensor ist, der an einem Grundkörper (10) der Ausgleichsvorrichtung (32) angeordnet ist.

13. Vorrichtung (32) nach einem der vorhergehenden Ansprüche, **dadurch gekennzeichnet, dass** die Aufnahmen (7, 8) über eine an der Befestigungsvorrichtung angeordnete und mit der Steuereinheit (22) verbundene Steuereinrichtung (20) in eine offene oder eine geschlossene, an der Welle (1) anliegende Position bringbar sind.

14. Vorrichtung (32) nach Anspruch 13, **dadurch gekennzeichnet, dass** die Steuereinrichtung (20) als Griffgarnitur mit Schaltern (24) ausgestaltet ist.

15. Vorrichtung (32) nach einem der vorhergehenden Ansprüche, **dadurch gekennzeichnet, dass** die Anzeigeeinheit (21) an der Ausgleichsvorrichtung (32) angeordnet ist.

## Claims

1. Method for attaching counterweights to a shaft (1), comprising at least one balancing device (32) that is movable longitudinally to the shaft (1) that is arranged in a device for measuring imbalance, and a fastening device for fastening the counterweights to the shaft (1), comprising the steps of:
a. receiving the shaft (1) in bearing means (26) of the device for measuring imbalance, which bearing means is arranged on a machine bed, such that said shaft is rotatable about an axis of rotation (18);
b. rotating the shaft (1) about the axis of rotation (18), determining the imbalance of the shaft (1), and calculating, by means of an evaluation unit, balancing masses and angular positions for at least two balancing planes associated with a specified balancing region (30, 31) in each case;
c. displaying a position of at least one balancing device (32) relative to the balancing planes associated with the balancing regions (30, 31) on a display unit (21) that is connected, for data exchange, to a control unit (22), a sensor (23) that is fixed to the balancing device (32) detecting position data and routing the position data to the control unit (22) which determines the position of the balancing device (32) relative to the balancing regions (30, 31);
d. moving the balancing device (32) into one of the displayed balancing regions (30, 31), and displaying, on the display unit (21), the balancing region (30, 31) approached by the balancing device (32) and the balancing mass associated with said region;
e. fitting the fastening device with a counterweight corresponding to the displayed balancing mass; and
f. initiating the process for fastening the counterweight to the shaft (1).

2. Method according to claim 1, **characterised in that** steps d. to f. are repeated in further balancing regions or balancing planes in order to attach further counterweights, it being possible to select the sequence for attaching the counterweights.

3. Method according to either claim 1 or claim 2, **characterised in that** the counterweight is fastened to the shaft (1) only when the balancing device (32) is positioned within the balancing region (30, 31) specified by the evaluation unit.

4. Method according to any of the preceding claims, **characterised in that** the control unit (22) determines the position of the balancing device (32) relative to the shaft (1) received in the bearing means (26), and the determined position is displayed on the display unit (21).

5. Method according to any of the preceding claims, **characterised in that** the sensor (23) fixed to the balancing device (32) detects position data arranged on the device for measuring imbalance, in particular on the machine bed.

6. Method according to any of the preceding claims, **characterised in that** fastening of the counterweight and movement of the balancing device (32) are initiated by switches (24) on a controller (20) arranged on the balancing device (32), in particular a handle fitting.

7. Method according to any of the preceding claims, **characterised in that** the shaft (1) is rotated, in step d., into the calculated angular position for attaching the counterweight.

8. Method according to any of the preceding claims, **characterised in that** a movement direction is detected during movement of the balancing device (32), and **in that** the shaft (1) is rotated, by means of the control unit (22), into the angular position that is determined for attaching a counterweight in the balancing region (30, 31) that is in the movement direction and is adjacent to the balancing device (32).

9. Balancing device (32) for attaching a counterweight in a specified balancing region (30, 31) of a shaft (1), which region is associated with a balancing plane, comprising a fastening device that can be controlled by a control unit (22) and a free end (6, 6') of which comprises a first and a second receptacle (7, 8) for a counterweight or the shaft (1), and a carriage (19) that is arranged on the balancing device (32) such that the balancing device (32) can be moved along the shaft (1) in the axial direction, the balancing device (32) comprising a sensor (23) for determining the position of the balancing device (32) relative to the shaft (1), and in that the balancing device (32) comprises a display unit (21) that is connected, for data exchange, to the control unit (22) and is designed such that the position of the balancing device (32) relative to the balancing region (30, 31) can be displayed.

10. Device (32) according to claim 9, **characterised in that** the control unit (22) comprises means for wireless or wired data exchange with an evaluation unit arranged on the balancing machine.

11. Device (32) according to either claim 9 or claim 10, **characterised in that** the display unit comprises means for wireless or wired data exchange with the control unit (22).

12. Device (32) according to any of the preceding claims, **characterised in that** the sensor (23) is a laser sensor that is arranged on a main body (10) of the balancing device (32).

13. Device (32) according to any of the preceding claims, **characterised in that** the receptacles (7, 8) can be brought into an open or closed position resting on the shaft (1), by means of a controller (20) that is arranged on the fastening device and is connected to the control unit (22).

14. Device (32) according to claim 13, **characterised in that** the controller (20) is designed as a handle fitting comprising switches (24).

15. Device (32) according to any of the preceding claims, **characterised in that** the display unit (21) is arranged on the balancing device (32).

## Revendications

1. Procédé de fixation de masses d'équilibrage sur un arbre (1) comprenant au moins un dispositif d'équilibrage (32) pouvant être déplacé le long de l'arbre (1) disposé dans un dispositif de mesure de balourd et étant muni d'un dispositif de fixation pour fixer les masses d'équilibrage sur l'arbre (1), comprenant les étapes consistant à :
a. loger l'arbre (1) dans un dispositif de palier (26) du dispositif de mesure du balourd disposé sur un bâti de machine, l'arbre étant rotatif autour d'un axe de rotation (18) ;
b. faire tourner l'arbre (1) autour de l'axe de rotation (18), déterminer le balourd de l'arbre (1) et calculer, à l'aide d'une unité d'exploitation, les masses d'équilibrage et les positions angulaires d'au moins deux plans d'équilibrage affectés chacun à une zone d'équilibrage (30, 31) prédéterminée ;
c. afficher une position d'au moins un dispositif d'équilibrage (32) par rapport aux plans d'équilibrage affectés aux zones d'équilibrage (30, 31) sur une unité d'affichage (21) reliée, pour des échanges de données, à une unité de commande (22), un capteur (23) fixé au dispositif d'équilibrage (32) saisissant des données de position et transmettant les données de position à l'unité de commande (22) qui détermine la position du dispositif d'équilibrage (32) par rapport aux zones d'équilibrage (30, 31) ;
d. déplacer le dispositif d'équilibrage (32) dans l'une des zones d'équilibrage affichées (30, 31) et afficher sur l'unité d'affichage (21) la zone d'équilibrage (30, 31) parcourue par le dispositif d'équilibrage (32) et la masse d'équilibrage associée à celle-ci ;
e. équiper le dispositif de fixation d'une masse d'équilibrage correspondant à la masse d'équilibrage indiquée et ;
f. lancer le processus de fixation de la masse d'équilibrage sur l'arbre (1).

2. Procédé selon la revendication 1, **caractérisé en ce que** les étapes d. à f. sont répétées pour fixer d'autres masses d'équilibrage dans d'autres zones ou plans d'équilibrage, l'ordre de fixation des masses d'équilibrage pouvant être choisi.

3. Procédé selon la revendication 1 ou 2, **caractérisé en ce que** la masse d'équilibrage n'est fixée sur l'arbre (1) que lorsque la position du dispositif d'équilibrage (32) se trouve dans la zone d'équilibrage (30, 31) prédéterminée par l'unité d'exploitation.

4. Procédé selon l'une des revendications précédentes, **caractérisé en ce que** l'unité de commande (22) détermine la position du dispositif d'équilibrage (32) par rapport à l'arbre (1) logé dans le dispositif de palier (26), et la position déterminée est affichée sur l'unité d'affichage (21).

5. Procédé selon l'une des revendications précédentes, **caractérisé en ce que** le capteur (23) fixé au dispositif d'équilibrage (32) saisit des données de position indiquées sur le dispositif de mesure du balourd, en particulier sur le bâti de machine.

6. Procédé selon l'une des revendications précédentes, **caractérisé en ce que** la fixation du poids d'équilibrage et le mouvement du dispositif d'équilibrage (32) sont déclenchés par des interrupteurs (24) sur un dispositif de commande (20), en particulier une garniture de poignée, disposé sur le dispositif d'équilibrage (32).

7. Procédé selon l'une des revendications précédentes, **caractérisé en ce qu'**à l'étape d., l'arbre (1) est tourné dans la position angulaire calculée pour fixer la masse d'équilibrage.

8. Procédé selon l'une des revendications précédentes, **caractérisé en ce qu'**une direction de déplacement est saisie lors du déplacement du dispositif d'équilibrage (32) et **en ce que** l'arbre (1) est tourné au moyen de l'unité de commande (22) dans la position angulaire déterminée pour la fixation d'une masse d'équilibrage dans la zone d'équilibrage (30, 31) située dans la direction du déplacement et adjacente au dispositif d'équilibrage (32).

9. Dispositif d'équilibrage (32) pour la fixation d'une masse d'équilibrage dans une zone d'équilibrage prédéterminée (30, 31) d'un arbre (1) affectée à un plan d'équilibrage, lequel dispositif d'équilibrage est muni d'un dispositif de fixation qui peut être commandé par une unité de commande (22) et qui présente à une extrémité libre (6, 6') un premier et un deuxième logement (7, 8) pour une masse d'équilibrage ou pour l'arbre (1), et d'un chariot (19) qui est disposé sur le dispositif d'équilibrage (32) de telle sorte que le dispositif d'équilibrage (32) peut être déplacé en direction axiale le long de l'arbre (1), le dispositif d'équilibrage (32) disposant d'un capteur (23) pour déterminer la position du dispositif d'équilibrage (32) par rapport à l'arbre (1), et en ce que le dispositif d'équilibrage (32) comprend une unité d'affichage (21) qui est reliée, pour des échanges de données, à l'unité de commande (22) et qui est configurée de telle sorte que la position du dispositif d'équilibrage (32) par rapport à la zone d'équilibrage (30, 31) peut être affichée.

10. Dispositif (32) selon la revendication 9, **caractérisé en ce que** l'unité de commande (22) est munie de moyens pour l'échange de données sans fil ou par câble avec une unité d'exploitation disposée sur la machine d'équilibrage.

11. Dispositif (32) selon la revendication 9 ou 10, **caractérisé en ce que** l'unité d'affichage est munie de moyens pour l'échange de données sans fil ou par câble avec l'unité de commande (22).

12. Dispositif (32) selon l'une des revendications précédentes, **caractérisé en ce que** le capteur (23) est un capteur laser qui est disposé sur un corps de base (10) du dispositif d'équilibrage (32).

13. Dispositif (32) selon l'une des revendications précédentes, **caractérisé en ce que** les logements (7, 8) peuvent être amenés dans une position ouverte ou une position fermée adjacente à l'arbre (1) par le biais d'un dispositif de commande (20) disposé sur le dispositif de fixation et relié à l'unité de commande (22).

14. Dispositif (32) selon la revendication 13, **caractérisé en ce que** le dispositif de commande (20) est conçu sous la forme d'une garniture de poignée avec des interrupteurs (24).

15. Dispositif (32) selon l'une des revendications précédentes, **caractérisé en ce que** l'unité d'affichage (21) est disposée sur le dispositif d'équilibrage (32).
